# EUROPEAN PATENT APPLICATION

(11) **EP 4 814 294 A1**
(43) Date of publication of application: **30.09.2026**
(21) Application number: 25382304.1
(22) Date of filing: 28.03.2025
(51) Int. Cl.: F03D 1/06, F03D 80/70

(54) **METHOD FOR MOUNTING A TENSIONING SYSTEM AND WIND TURBINE**

(71) Applicant: Nordex Energy Spain, S.A.U., 31395 Barasoain (Navarra) (ES)
(72) Inventor: Pascual Resano, Javier, 31395 Barasoain (ES); Echarri Latasa, Roman, 31395 Barasoain (ES); Azanza Ladrón, Carlos, 31395 Barasoain (ES); Aristegui Lantero, Jose Luis, 31395 Barasoain (ES)
(74) Representative: Epping - Hermann - Fischer

(57) **Abstract**

A method for mounting a tensioning system (320) to a bearing (200) for a wind turbine (100) is disclosed. The method comprises:
- fixing a first end region (371) of a tensioner (331) in a retaining device (341),
- fixing a second end region (372) in the retaining device (341),
- filling a first cap (391) with an anti-corrosion agent (560),
- filling a second cap (392) with an anti-corrosion agent (560),
- attaching the first cap (391) to the retaining device (341) such that it covers the first end (361),
- attaching the second cap (392) to the retaining device (341) such that it covers the second end (362). A wind turbine is also disclosed.

## Description

The disclosure relates to a method for mounting a tensioning system to a bearing for a wind turbine. The disclosure further relates to a wind turbine, in particular to a wind turbine with a tensioning system that is mounted using a method as disclosed herein.

A wind turbine may include a rotor that includes a rotatable rotor assembly having multiple rotor blades. The rotor blades transform wind energy into a drive torque that drives the generator of the wind turbine via a drive train.

In occasions, it is desirable to provide a method for mounting a tensioning system to a bearing of a wind turbine and a wind turbine, each of which provides a reliable operation.

Embodiments of the disclosure provide a method for mounting a tensioning system to a bearing for a wind turbine. Embodiments of the disclosure provide a wind turbine.

According to an embodiment, the method comprises:
- providing an elongated, flexible tensioner,
   wherein the tensioner comprises a first end and a second end, a first end region adjoining the first end and a second end region adjoining the second end,
- providing a retaining device, wherein the retaining device is configured to keep the tensioner under tension,
- providing a first cap and a second cap,
- fixing the first end region in the retaining device,
- fixing the second end region in the retaining device,
- filling the first cap with an anti-corrosion agent,
- filling the second cap with an anti-corrosion agent,
- attaching the first cap to the retaining device such that it covers the first end,
- attaching the second cap to the retaining device such that it covers the second end.

According to some embodiments, the tensioner, the retaining device, the first cap, and the second cap are parts of the tensioning system. In a mounted state on the bearing, the tensioning system may apply a compressive force to the bearing. The tensioning system may be configured to reinforce the bearing. According to some embodiments, the bearing is a pitch bearing. The method is carried out in particular while the rotor is at the top of the tower.

The anti-corrosion agent is useful to avoid corrosion of the tensioner, in particular at the ends. Moisture and/or air can lead to corrosion if they come into direct contact with the tensioner. The anti-corrosion agent covers the tensioner and protects it from direct contact with moisture and/or air. For example, the anti-corrosion agent comprises grease or consists of grease. For example, the anti-corrosion agent comprises oil or consists of oil. Other fluids, which are configured for protecting the tensioner, can be used as the anti-corrosion agent.

The caps provide additional protection against environmental influences. In particular, the caps prevent the anti-corrosion agent from escaping unintentionally. The caps also protect against mechanical impacts. The caps prevent the ends from being exposed to the environment.

According to some embodiments, the method comprises cutting the tensioner in the second end region to a preset length prior to attaching the second cap. For example, the second end region is used for tensioning the tensioner. A tensioning device is configured to engage and grab the tensioner at the second end region to apply a tensioning force to the tensioner. The retaining device is configured to keep the tensioner under tension after tensioning by the tensioning device. The tensioning device comprises for example a hydraulic tensioning device and/or a mechanical tensioning device. For the engagement with the tensioner, the second end region may be left longer and cut after the tensioning to a desired length. In particular, a piece that is no longer needed is cut off.

According to some embodiments, the method comprises:
- fixing the first cap and the retaining device to each other with a first screw connection, and
- fixing the second cap and the retaining device to each other with a second screw connection.

The screw connections provide each a fluid-tight and reliable coupling between the caps and the retaining devices.

According to some embodiments, the retaining device comprises a first through hole for the first end and a second through hole for the second end, wherein the retaining device comprises a first access to the first through hole from the outside and a second access to the second through hole from the outside. The first through hole and the second through hole are each configured to allow the passage of the tensioner. According to some embodiments, the method comprises:
- filling an anti-corrosion agent into the first through hole through the first access, and
- filling an anti-corrosion agent into the second through hole through the second access. For example, the used anti-corrosion agent is of the same kind as the anti-corrosion agent for filling the caps. The anti-corrosion agent in the through holes of the retaining devices is useful to avoid corrosion of the tensioner, in particular of the parts inside the through holes. Moisture and/or air can lead to corrosion if they come into direct contact with the tensioner. The anti-corrosion agent covers the tensioner and protects it from direct contact with moisture and/or air. The accesses allow each for an easy filling of the through holes with the anti-corrosion agent. For example, it is possible to fill the anti-corrosion agent into the through hole after the tensioning of the tensioner.

According to some embodiments, the method comprises:
- closing the first access after filling the anti-corrosion agent into the first through hole with a first cover, and
- closing the second access after filling the anti-corrosion agent into the second through hole with a second cover. This prevents the anti-corrosion agent from escaping unintentionally through the accesses. For example, dirt is prevented from entering the through holes through the accesses.

According to some embodiments, the method comprises:
- arranging a first sealing on the tensioner at the first end region for sealing the transition between the tensioner and the retaining device, and
- arranging a second sealing on the tensioner at the second end region for sealing the transition between the tensioner and the retaining device. This prevents the anti-corrosion agent from escaping unintentionally at the transitions. For example, dirt is prevented from entering the through holes at the transitions.

According to some embodiments, the sealing comprises a heat shrink foil. According to some embodiments, the method comprises:
- arranging a heat shrink foil over a part of the retaining device and a part of the tensioner such that the heat shrink foil extends over the transition,
- applying heat to the heat shrink foil to shrink the heat shrink foil for sealing the transition between the tensioner and the retaining device. This prevents the anti-corrosion agent from escaping unintentionally at the transitions. For example, dirt is prevented from entering the through holes at the transitions.

According to some embodiments, the method comprises:
- wrapping the heat shrink foil over the part of the retaining device and a part of the tensioner,
- bringing together two ends of the heat shrink foil,
- arranging a fastener onto the two ends that holds the two ends together. This allows the heat shrink foil to be held in place before the heat is applied.

Alternatively, or in addition, according to some embodiments, the sealing comprises a sealing tape. According to some embodiments, the method comprises:
- arranging a sealing tape over a part of the retaining device and a part of the tensioner such that the sealing tape foil extends over the transition for sealing the transition between the tensioner and the retaining device. This prevents the anti-corrosion agent from escaping unintentionally at the transitions. For example, dirt is prevented from entering the through holes at the transitions. For example, the sealing tape allows for a reliable sealing without applying heat.

Alternatively, or in addition, according to some embodiments, the sealing comprises a curable sealing compound. According to some embodiments, the method comprises:
- arranging a curable sealing compound between the retaining device and the tensioner at the transition,
- curing the sealing compound. This prevents the anti-corrosion agent from escaping unintentionally at the transitions. For example, dirt is prevented from entering the through holes at the transitions. For example, the sealing compound is a viscous mass in a first state for arrange the sealing compound. For example, the sealing compound is cured by contact with air and/or heat.

According to some embodiments, the wind turbine comprises a bearing. The wind turbine comprises a tensioning system. The tensioning system surrounds the bearing for reinforcing the bearing. The tensioning is mounted using a method as described herein. For example, the bearing connects a rotor blade and a rotor hub. According to embodiments, the bearing is a pitch bearing. The tensioning system is coupled to the bearing, in particular to exert a radial compression force to the bearing. The retaining device is or the retaining devices are filled with the anti-corrosion agent to avoid corrosion of the tensioner or the tensioners.

Advantages, features and further developments of the method, the guide, the tensioning system and/or the wind turbine also apply to the other embodiments.

Embodiments of the present invention will be further described with reference to the accompanying drawings. In the drawings, elements of the same structure and/or functionality may be referred to by the same reference signs. Embodiments shown in the figures are illustrative representations and are not necessarily drawn to scale.
Figure 1 is a schematic view of a wind turbine according to an embodiment.
Figure 2 is a schematic view of a tensioning system according to an embodiment.
Figure 3 is a schematic view of a rotor hub with tensioning systems according to an embodiment.
Figure 4 is a schematic view of a bearing with a tensioning system according to an embodiment.
Figures 5 to 25 are schematic views of details of tensioning systems according to embodiments.
Figure 26 is a flowchart of a method according to an embodiment.

While the invention is amenable to various modifications and alternative forms, specifics thereof have been shown by way of examples in the drawings and will be described in detail. It should be understood, however, that the intention is not to limit the invention to the particular embodiments described. On the contrary, the intention is to cover all modifications, equivalents and alternatives falling within the scope of the invention as defined by the appended claims.

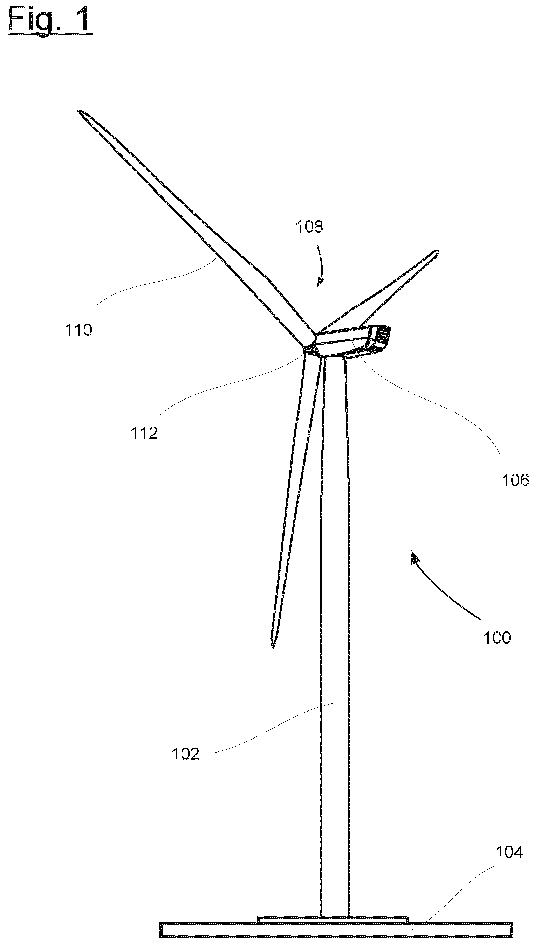

As shown in Figure 1, a wind turbine 100 comprises a tower 102. The tower 102 is connected to a foundation 104 fixed to the ground. Specifically, the foundation 104 may be formed at a predetermined depth inside the ground, which is reinforced by a composite structure, for example a concrete support. A nacelle 106 is arranged on a top of the tower 102 opposite the foundation 104. The nacelle 106 houses the drive train among other components and subassemblies. Inside the nacelle 106, for example, a generator is arranged that is connected to a rotor 108 via the drive train. The drive train may comprise, for example, a gearbox and a rotor shaft. The rotor 108 comprises rotor blades 110. The rotor blades are rotatably mounted on a rotor hub 112. The rotor hub 112 is connected to the rotor shaft.

For example, the rotor 108 is driven by an airflow interaction of moving wind with the rotor blades 110 of the rotor 108. During operation, for example, the wind mainly comes in along a main wind inflow direction. For example, a distal end of the rotor hub faces the main wind inflow direction, which can also be called "upwind side". The distal end is positioned opposite the end on which the rotor shaft is mounted.

The rotational movement of the rotor 108 is transmitted via the drive train to the generator. The generator converts the mechanical output of the rotor 108 into electrical energy. By rotating the rotor blades 110 relative to the hub 112, the load on the rotor may be controllable. The rotor blades 110 are configured to be pitched in and out of the wind in order to modulate the energy capture as wind decreases or increases. The rotor blades 110 are pitchable to adapt the output or to protect the wind turbine from damaging overloads.

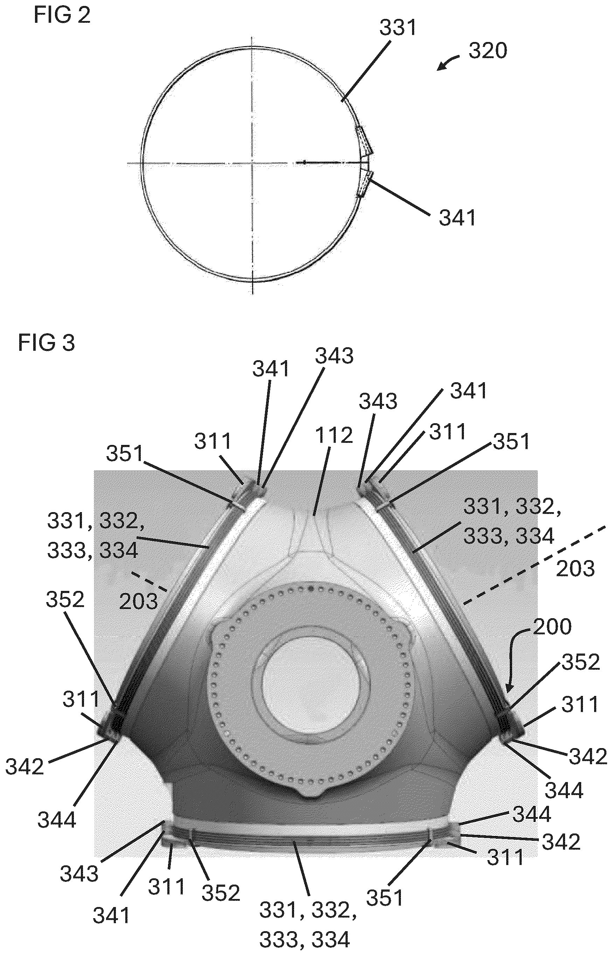

To perform the pitch control, each rotor blade 110 is provided with a pitch bearing 200 as shown for example in Figure 3. The pitch bearing 200 is located generally between the rotor hub 112 and the respective rotor blade 110. A mechanism, for example a hydraulic cylinder or an electric motor, provides the necessary energy and force for pitching the respective rotor blade 110.

The pitch bearing 200 is an example of a bearing 200 that may be used in the wind turbine 100. The following disclosure may also be correspondingly used with other bearings, like a yaw bearing.

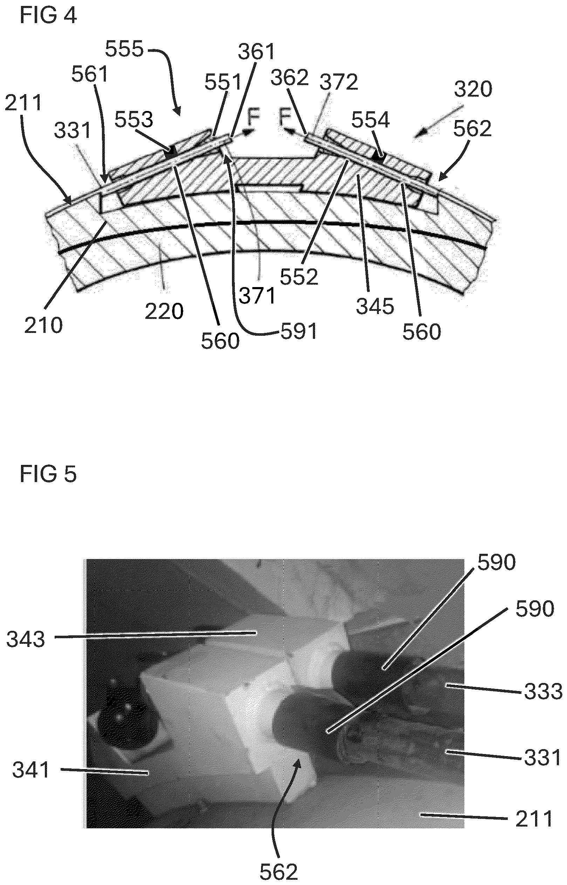

The bearing 200 comprises a first bearing ring 210 and a second bearing ring 220 (Figure 4). The first bearing ring 210 is attached to a wind turbine component, like the rotor hub 112. The second bearing ring 220 is attached to a second wind turbine component, like the rotor blade 110. The bearing 200 may be a rolling element bearing, like a ball bearing. Bearing elements may be arranged between the first bearing ring 210 and the second bearing ring 220 to enable relative rotation between the first bearing ring 210 and the second bearing ring 220 around an axis 203 (Figure 3).

The first bearing ring 210 comprises an outer surface 211 facing radially outwards. In particular, the outer surface 211 faces away from the second ring 220.

The first bearing ring 210, which for example is connected to the rotor hub 112, comprises a first surface facing axially, for example perpendicular to the axis 203 through the centre of bearing ring 210. The first bearing ring 210 comprises a second surface which also faces axially. The first surface and the second surface are arranged opposite each other. In particular, the first surface may face the rotor blade 110 and the second surface may face the rotor hub 112. The second surface may be arranged nearer to the hub 112 than the first surface 211. The first surface is arranged more proximate to the rotor blade 110 than the second surface. The outer surface 211 connects the first surface and the second surface.

An embodiment of a tensioning system 320 may be provided to reinforce the bearing 200.

The tensioning system 320 may be coupled to the bearing 200, in particular connected to the first bearing ring 210, in particular on the outer surface 211. The tensioning system 320 may provide compression forces and/or stiffness to the first bearing ring 210 to reinforce and stabilize the first bearing ring 210 at least locally and thus the bearing 200. The tensioning system 320 may enable the use of a more lightweight bearing 200 for the same wind forces and/or to reinforce an existing bearing 200 which, for example, is damaged. Thus, the tensioning system 320 may be retrofittable to existing bearings 200.

Figure 2 schematically shows an example of the tensioning system 320.

The tensioning system 320 comprises one tensioner 331 or more tensioners 331, 331, 333, 334. For example, the tensioning system 320 comprises exactly two tensioners 331, 332. For example, the tensioning system 320 comprises exactly four tensioners 331, 332, 333, 334. The tensioners can each be at least one of a cable, a belt, a strand, a rope, and any other elongated, flexible element that can withstand the forces that occur.

The tensioning system 320 further comprises one retaining device 341 or a plurality of retaining devices 341, 342, 343, 344.

One tensioner 331, for example, is coupled with one retaining device 341. The tensioner 331 and the retaining device 341 are configured such that the tensioner 331 is fixed to the retaining device 341 under tension. The retaining device 341 is configured to hold the tensioner 331 under tension. The tensioning system 320, in particular the tensioner 331 and the retaining device 341, is arranged at the outer surface 211 of the first bearing ring 210. For example, the tensioning system 320 is arranged nearer to a first surface than to an opposite second surface of the first bearing ring 210.

For example, the tensioning system 320 is configured to completely surround the first bearing ring 210 at the outer surface 211 by 360°.

A tensioning force F (Figure 4) may be applied to the tensioner 331 such that compression forces act radially inwards on the first bearing ring 210. For example, the tensioning force is applied by a tensioning device. The tensioning device comprises for example a hydraulic tensioning device and/or a mechanical tensioning device.

The tensioning force for each of the tensioners 331 to 334 may be, for example, greater than 50 kN, greater than 80 kN, greater than 90 kN, greater than 100 kN, less than 350 kN, in a range of between 75 kN and 250 kN, in a range of between 80 kN and 250 kN, in a range of between 90 kN and 250 kN, in a range of between 100 kN and 250 kN, in a range of between 125 kN and 200 kN, in a range of between 125 kN and 175 kN. For example, the tensioning force 322 may be 150 kN.

The retaining device 341 to 344 is configured to fix the tensioner 323, 324 such that the compression forces are maintained. Since the tensioning system 320 may surround the first bearing ring 210, the compression forces act along the entire outer surface 211. The compression forces may differ along the outer surface 211, for example due to friction. It is possible to arrange the retaining devices such that a region or a plurality of regions in which the compression force is highest is/are at desired region/s of the outer surface 211, for example in an upwind area.

For example, the level of the compression forces of the first bearing ring 210 may be specified by the maximum tensioning force that can be applied to the tensioners 331 to 334. But also, the effect of that level of the compression forces in the bearing ring stresses and the bearing raceways may need to be considered. For example, the level of the tensioning force is set dependent on the type of the bearing 200.

Figure 3 shows the rotor hub 112 with three tensioning systems 320. The rotor hub 112 is configured to be coupled to three rotor blades 110. Three bearings 200 are mounted to the rotor hub 112, one bearing 200 for each rotor blade 110. One tensioning system 320 is provided for each bearing 200. For example, the tensioning systems 320 are each provided so that they correspond to each other in the same way. One tensioning system 320 is therefore described below, whereby the disclosure also applies to the other tensioning systems 320.

The tensioning system 320 comprises four tensioners 331 to 334. The tensioning system 320 comprises four retaining devices 341 to 344. Two retaining devices 341, 343; 342, 344 are arranged directly next to each other. Two retaining devices 341, 343 are arranged opposite the other two retaining devices 342, 344.

According to some embodiments, reinforcement plates 311 may be attached to the first bearing ring 210 to reinforce the first bearing ring 210. According to other embodiments, the reinforcement plates may be omitted.

The reinforcement plates 311 may increase the stiffness of the first bearing ring 210 locally. For example, the reinforcement plates 311 are fixed to the first bearing ring 210 via bolt connection. The reinforcement plates 311 for example are stacked to form a plate stack.

The reinforcement plates 311 may be made of a metal, for example steel or iron. The reinforcement plates 311 may be mounted in places of the first bearing ring 210 where reinforcement is required locally, for example where the bearing ring is damaged, for example by a crack. Alternatively, or in addition, the reinforcement plates 311 may be mounted in places of the first bearing ring 210 where reinforcement is required locally, for example on a side which is positioned upwind. Alternatively, or in addition, the reinforcement plates 311 may be mounted in places of the first bearing ring 210 where reinforcement is required locally, for example in an area of a recess for introducing the bearing elements.

For example, two plate stacks of reinforcement plates 311 are provided at the bearing 200 as shown in Figure 3. The two retaining devices 341, 343 are arranged directly next to one of the plate stack and the other two retaining devices 342, 344 are arranged directly next to the other plate stack.

According to some embodiments, the tensioning system 320 further comprises guides 351, 352. According to other embodiments, the guides may be omitted. According to embodiments, the tensioning system 320 comprises one guide 351 or a plurality of guides 351, 352. The guides 351, 352 are each configured to hold the tensioners 331 to 334 to the outer surface 211 of the first bearing ring 211 during operation of the wind turbine. The guides 351, 352 are each configured to hold one single tensioner 331 or a plurality of tensioners 331 to 334, for example four tensioners 331 to 334.

The guides 351, 352 are attached to the first bearing ring 210. The guides 351, 352 extend over a part of the outer surface 211. The tensioners 331 to 334 are arranged between the outer surface 211 and the guides 351, 352 along a radial direction. The guides 351, 352 are configured to prevent shifting and/or slipping of the tensioners 331 to 334 along the outer surface 211 during operation of the wind turbine. As shown in Figure 4 for example, the tensioner 331 comprises a first end 361 and a second end 362. The tensioner 331 is elongated between the first end 361 and the second end 362. A first end region 371 adjoins the first end 361. A second end region 372 adjoining the second end 362. The tensioner 331 is wrapped around the outer surface 211 by pushing and/or pulling is around the bearing 200. The first end region 371 and the second end region 372 are each inserted into retaining device 341.

The retaining device comprises a main body 345. The main body 345 is made of metal. The main body 345 comprises two through holes 551, 552, one for each end region 371, 372 of the tensioner 331. The first end region 371 is introduced into the first through hole 551. The second end region 372 is introduced into the second through hole 552.

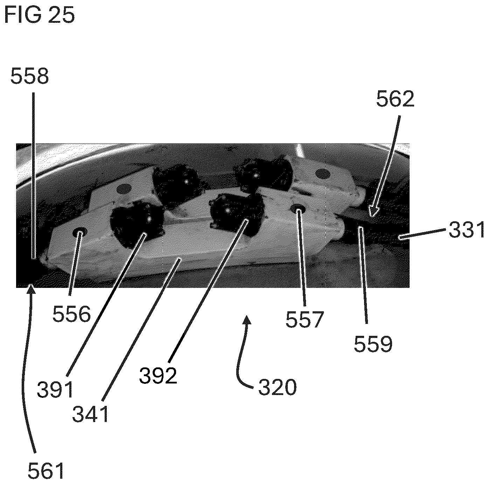

The main body 345 encloses a first access 553 to the first through hole 551. The first access 553 for examples is a hole in the main body 345. The first access 553 enables an anti-corrosion agent 560 to be introduced into first through hole 551. The first access 553 provides access to the first through hole 551 from an outside 555 of the main body 345. The first access 553 is closed when ready for operation, for example, in particular by means of a first cover 556 (Figure 25). In particular, it is possible to introduce the anti-corrosion agent 560 when the tensioner 331 is located in the first through hole 551 and is under tension.

The main body 345 encloses a second access 554 to the second through hole 552. The second access 554 for examples is a hole in the main body 345. The second access 554 enables the anti-corrosion agent 560 to be introduced into second through hole 552. The second access 554 provides access to the second through hole 552 from the outside 555 of the main body 345. The second access 554 is closed when ready for operation, for example, in particular by means of a second cover 557 (Figure 25). In particular, it is possible to introduce the anti-corrosion agent 560 when the tensioner 331 is located in the second through hole 552 and is under tension. It is also possible to introduce the anti-corrosion agent 560 when the tensioner 331 is located in the second through hole 552 and is not yet under tension.

In the following, various examples are described below of how the tensioning system 320 can be installed and the anti-corrosion 560 agent can be introduced to protect the tensioner 331. In particular, different types of sealing of transitions 561, 562 from the main body 345 to the tensioner 331 are described. The following can be used for all tensioners 331, 332, 333, 334 and retaining devices 341, 342, 343, 344. Therefore, it is only described on the basis of one tensioner 331 and one retaining device 341. The disclosure also applies to the other tensioners 332, 333, 334 and retaining devices 342, 343, 344 that may be provided according to examples.

As shown in Figure 5, it is possible that an existing sealing like a self-vulcanizing tape 590 is removed. This is particularly the case if a tensioner is replaced or in other maintenance cases. Of course, no sealing needs to be removed for the initial installation.

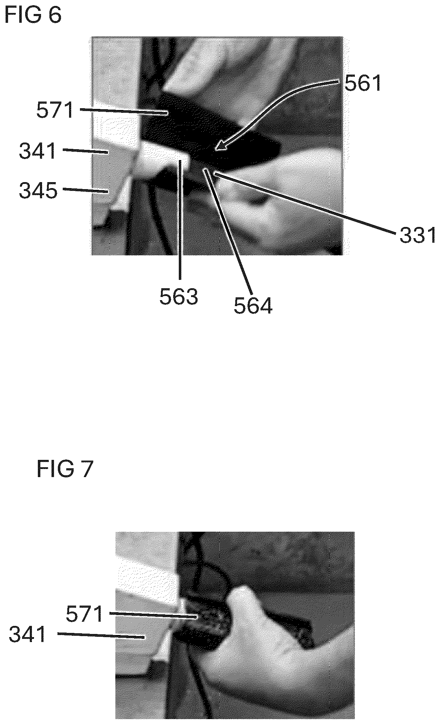

Figures 6 to 12 show an example with a heat shrink foil 571 for a sealing 558, 559 (Figure 25). The mounting of the heat shrink foil 571 is explained for one side of the retaining device 341 to build the first sealing 558 at the first transition 561. On the other side, the same steps are followed to mount the second sealing 559 at the second transition 562.

As shown in Figures 6 and 7, the heat shrink foil 571 is provided as a sheet. The heat shrink foil 571 is wrapped around the first transition 561 such that it covers a part 563 of the main body 345 and a directly adjacent part 564 of the tensioner 331. The heat shrink foil 571 extends over the part 563 of the main body 345 and the part 564 of the tensioner 331. The heat shrink foil 571 extends from the retaining device 341 to the tensioner 331.

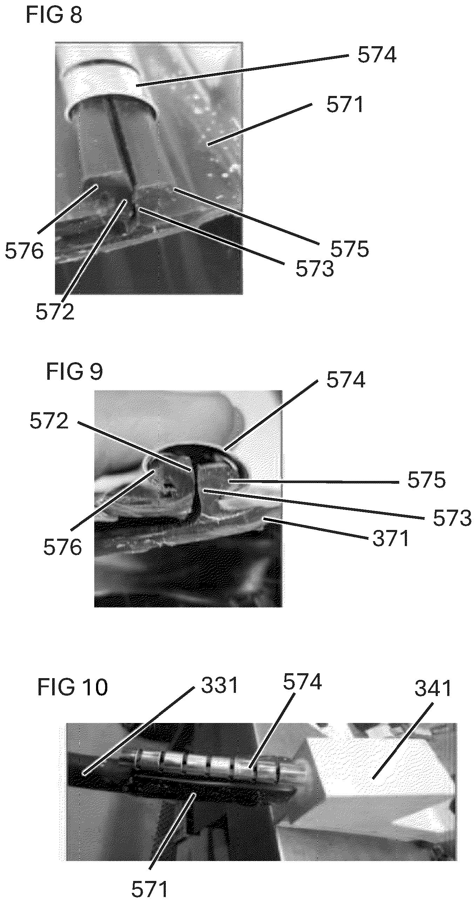

As shown in Figures 8 to 10, the heat shrink foil 571 is wrapped around the transition 561 such that two ends 572, 573 of the heat shrink foil 571 touch each other. For example, the heat shrink foil 571 overlaps at the ends 572, 573.

A fastener 574 is arranged to hold the two ends 572, 573 together. The fastener 574 keeps the heat shrink foil 571 securely in place for further processing.

For example, the heat shrink foil 571 has a protrusion 575 at the first end 572 and a further protrusion 576 at the second end 573. For example, the fastener 574 is pushed over the protrusions 575, 576 along the longitudinal direction of the protrusions 575, 576. Other types of attachment of the fastener 574 are also possible.

In particular, the fastener 574 is heat-resistant. The fastener 574 is made of metal, for example.

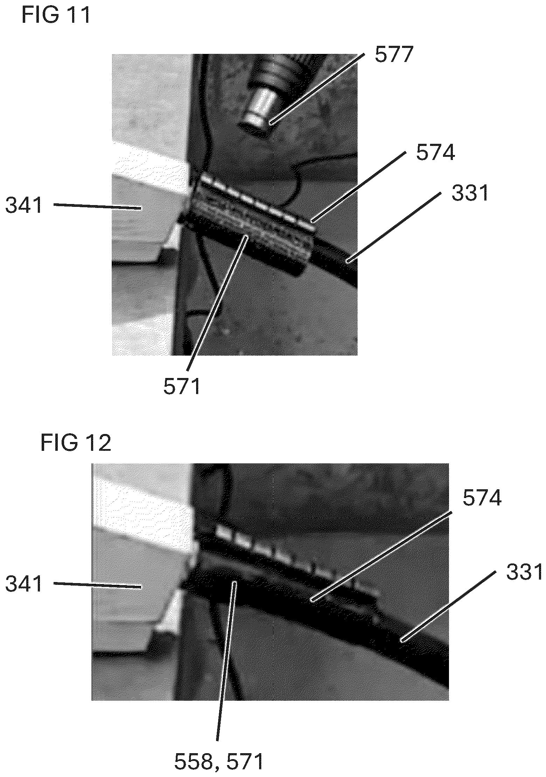

As shown in Figure 11, heat 577 is applied to the heat shrink foil 571. For example, the heat 577 is applied with a hot air gun. In particular, the heat 577 is applied to the two ends 572, 573. The heat 577 connects the heat shrink foil 571 at both ends 572, 573. The heat enables the heat shrink foil 571 to contact fluid-tight around the transition 561. The sealing 558 is thus formed, as shown in Figure 12.

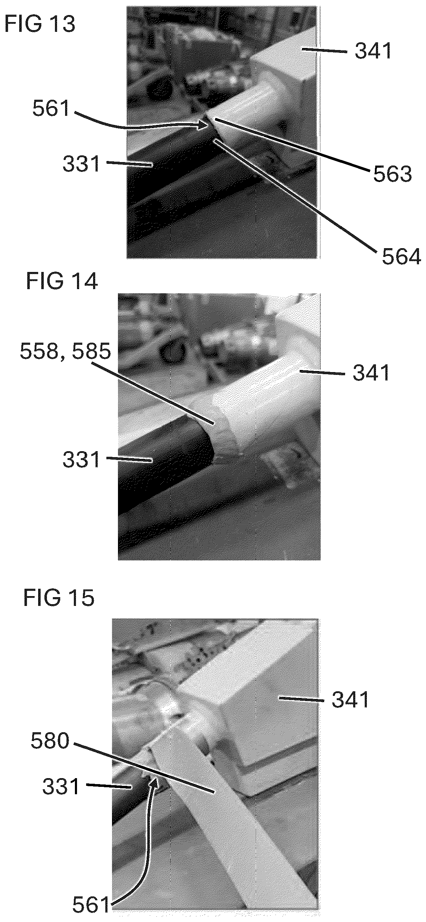

Figures 13 and 14 show a further example of the sealing 558. A curable sealing compound 585 is applied to the transition 561 in a paste-like, soft state. The sealing compound 585 is then cured, for example in the air, using heat or special electromagnetic radiation such as UV radiation. The sealing 558 is thus formed, as shown in Figure 14.

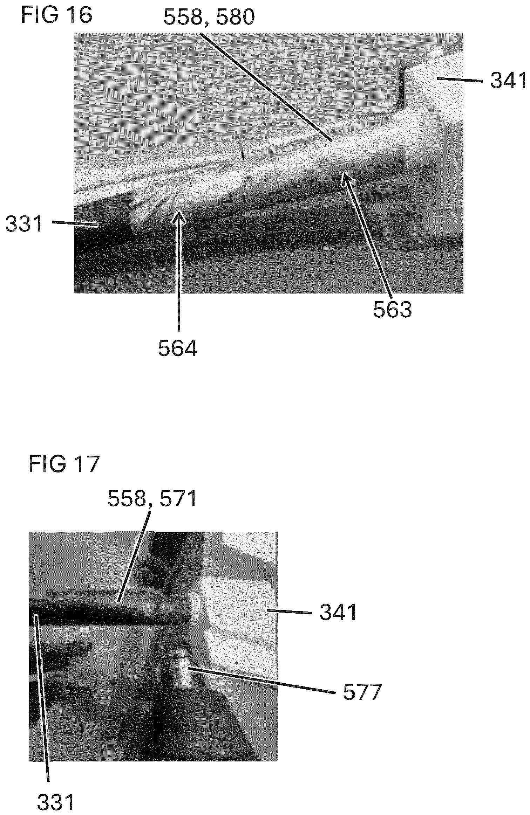

Figures 15 and 16 show a further example of the sealing 558. A sealing tape 580 is wrapped around the transition 561. For example, the sealing tape 580 is an adhesive tape. It is possible, that the sealing tape 580 is provided in addition to the cured sealing compound 585. The sealing tape 580 is wound in such a way that it covers the part 563 of the retaining device 341 and the part 564 of the tensioner 331. The sealing 558 is thus formed, as shown in Figure 16.

Figure 17 shows a further example of the sealing 558. The sealing is formed with a heat shrink foil 571. In contrast to Figures 6 to 12, the heat shrink foil 571 is not provided as a sheet but as a sleeve. The heat 577 is applied to the heat shrink foil 571 to contract the heat shrink foil 571 and form the sealing 558. In particular, the sleeve of the heat shrink foil 571 is pushed onto the tensioner 331 before the tensioner 331 is inserted into the through hole 551 and/or into the through hole 552.

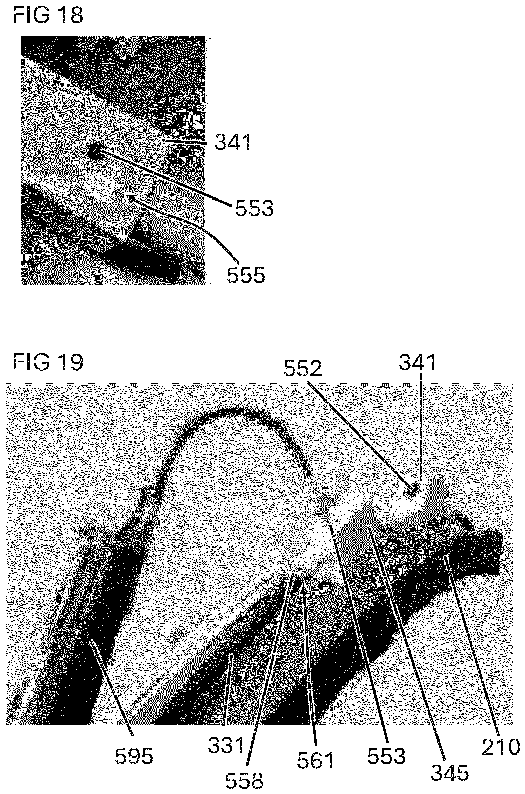

After forming the sealing 558, the anti-corrosion agent 560 is applied, as shown in Figures 18 to 21. For example, the anti-corrosion agent 560 is a grease. The sealing 558 is a sealing that blocks the anti-corrosion agent 560. The sealing 558 stops the anti-corrosion agent 560 from escaping the through hole 551 at the transition 561.

As shown in Figures 18 and 19, a pump 595 is connected to the access 553. The pump 595 is configured to pump the anti-corrosion agent 560 into the through hole 551 via the access 553. The pump 595 is used to pump the anti-corrosion agent 560 into the through hole 551 so that the free space in the through hole 551 between the tensioner 331 and the main body 345 is completely or as completely as possible or almost completely filled with the anti-corrosion agent 560.

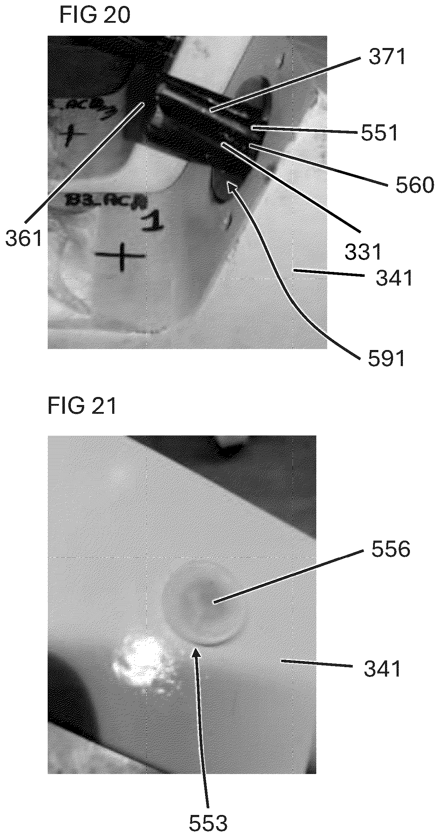

As shown in Figure 20, the anti-corrosion agent 560 is pumped into the through hole 551 until the anti-corrosion agent 560 leaks out from the through hole 551 at a side 591 of the through hole 551 opposite the sealing 558 at the end region 371. As the sealing 558 seals the transition 561 and the access 553 is closed by connection of the pump 595, the anti-corrosion agent 560 can only escape at this location. If the anti-corrosion agent 560 escapes at the end region 371, it is known that the through hole 551 is completely filled with the anti-corrosion agent 560.

As shown in Figure 21, the pump 595 is removed after filling and the access 553 is closed with the cover 556. The cover 556 closes the access 553 so that the anti-corrosion agent 560 is blocked from getting out of the through hole 551 through the access 553. For example, the cover 556 is a plastic cover.

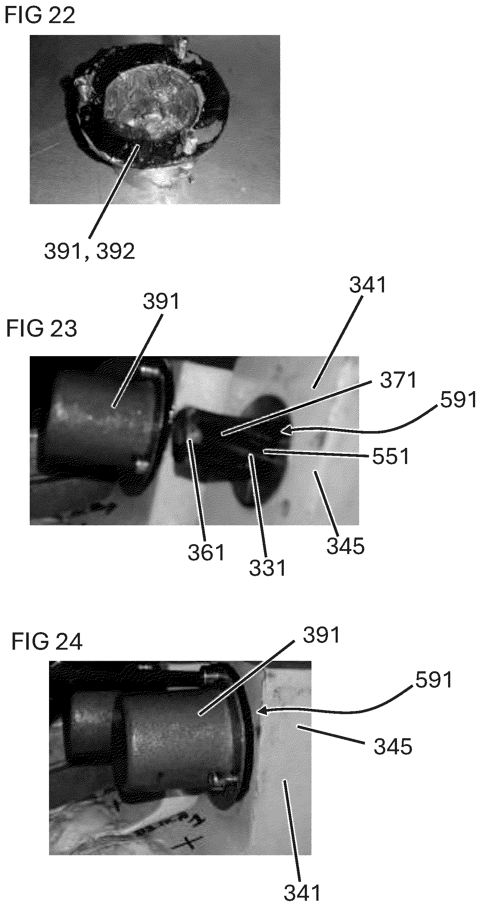

Figure 22 shows a cap 391, 392. The cap 391, 392 is configured to close the through hole 551 at the side 591. The tensioner 331 is cut in the end region 371 to a desired length after tensioning, such that the cap 391 can be placed over the projection end region 371, as shown in Figure 23. For example, the end region 371 projects in a range of 15 to 35 mm over the main body 345 along the longitudinal axis of the tensioner 331. In particular, the cap 391 is at least partly filled with anti-corrosion agent 560 before fixing the cap 391 to the main body 345. The cap 391 ensures that the end region 371 is also covered with the anti-corrosion agent 560 and protected from corrosion.

Figure 24 shows the cap 391 fixed to the main body 345. For example, the cap 319 is fixed to the main boy 345 via a screw connection. For example, the cap 319 is fixed to the main boy 345 with screws. The cap 391 is connected to the main body 345 in a fluid-tight manner to prevent the anti-corrosion agent 560 from escaping at the side 591.

Figure 25 shows the tensioning system 320 in a state ready for operation. After filling with the anti-corrosion agent 560, the first through hole 551 is closed fluid-tight at all openings. The first sealing 558 closes the first through hole 551 at the first transition 561. The first cover 556 closes the first through hole 551 at the first access 553. The first cap 391 closes the first through hole 551 at the side 591. After filling with the anti-corrosion agent 560, the second through hole 552 is closed fluid-tight at all openings. The second sealing 559 closes the second through hole 552 at the second transition 562. The second cover 557 closes the second through hole 552 at the second access 554. The second cap 392 closes the second through hole 552 at the side 591.

The tensioner 331 is reliably covered with the anti-corrosion agent 560 in the region of the main body 345, in particular where a jacket of the tensioner 311 has been removed and is therefore reliably protected against corrosion.

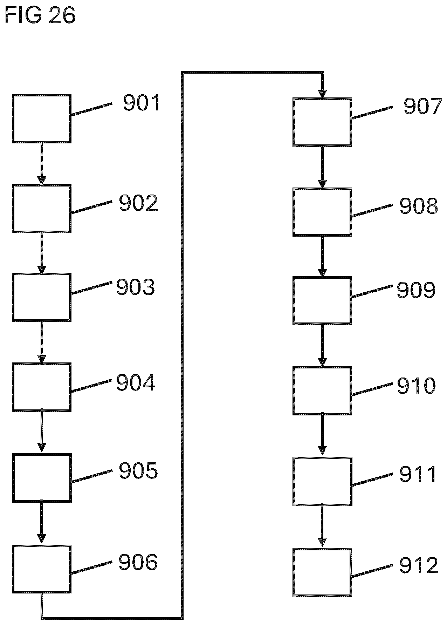

Figure 26 shows a flowchart of a method for mounting the tensioning system 320 to the bearing 200. In particular, the method is used for mounting the tensioning system 320 according to any of the examples describes herein.

In a step 901, the first end region 371 of the tensioner 331 is fixed in the retaining device 341.

In a step 902, the second end region 372 of the tensioner 331 is fixed in the retaining device 341. In particular, the tensioner 331 is tensioned using a tensioning device that applies the tensioning force F to one of the end regions 371, 372. The tensioner 331 is fixed to the retaining device 341 under tension.

In a step 903, the anti-corrosion agent 560 is added into the first cap 391.

In a step 904, the first sealing 558 is arranged at the main body 345 of the retaining device 341.

In a step 905, the anti-corrosion agent 560 is filled into the first through hole 551 via the first access 553.

In a step 906, the first access 553 is closed with the first cover 556.

In a step 907, the first through hole 551 is closed at the first end region 371 with the first cap 391.

In a step 908, the anti-corrosion agent 560 is added into the second cap 392.

In a step 909, the second sealing 559 is arranged at the main body 345 of the retaining device 341.

In a step 910, the anti-corrosion agent 560 is filled into the second through hole 552 via the second access 554.

In a step 911, the second access 554 is closed with the second cover 557.

In a step 912, the second through hole 552 is closed at the second end region 372 with the second cap 392.

The sequence of the steps can be changed where appropriate. For example, step 903 can be directly before step 907 and/or steps 906, and 907 can be exchanged.

### References

100 wind turbine
102 tower
104 foundation
106 nacelle
108 rotor
110 rotor blade
112 rotor hub
200 bearing
203 axis
210 first bearing ring
211 outer surface
220 second bearing ring
311 reinforcement plate
320 tensioning system
331 - 334 tensioner
341 - 344 retaining device
345 main body
351, 352 guide
361 first end
362 second end
371 first end region
372 second end region
391, 392 cap
551 first through hole
552 second through hole
553 first access
554 second access
555 outside
556 first cover
557 second cover
558 first sealing
559 second sealing
560 anti-corrosion agent
561 first transition
562 second transition
563 part of retaining device
564 part of tensioner
571 heat shrink foil
572, 573 ends
574 fastener
575, 576 protrusion
577 heat
580 sealing tape
585 curable sealing compound
590 self-vulcanizing tape
591 side
595 pump
901-912 method steps
F tensioning force

## Claims

1. A method for mounting a tensioning system (320) to a bearing (200) for a wind turbine (100), the method comprising:
- providing an elongated, flexible tensioner (331),
wherein the tensioner (331) comprises a first end (361) and a second end (362), a first end region (371) adjoining the first end (361) and a second end region (372) adjoining the second end (362),
- providing a retaining device (341), wherein the retaining device (341) is configured to keep the tensioner (331) under tension,
- providing a first cap (391) and a second cap (392),
- fixing the first end region (371) in the retaining device (341),
- fixing the second end region (372) in the retaining device (341),
- filling the first cap (391) with an anti-corrosion agent (560),
- filling the second cap (392) with an anti-corrosion agent (560),
- attaching the first cap (391) to the retaining device (341) such that it covers the first end (361),
- attaching the second cap (392) to the retaining device (341) such that it covers the second end (362).

2. The method according to the preceding claim, comprising
- cutting the tensioner (331) in the second end region (372) to a preset length prior to attaching the second cap (392).

3. The method according to any one of the preceding claims, comprising:
- fixing the first cap (391) and the retaining device (341) to each other with a first screw connection, and
- fixing the second cap (392) and the retaining device (341) to each other with a second screw connection.

4. The method according to any one of the preceding claims, wherein the retaining device (342) comprises a first through hole (551) for the first end region (371) and a second through hole (552) for the second end region (372), wherein the retaining device (341) comprises a first access (553) to the first through hole (551) from the outside (555) and a second access (554) to the second through hole (552) from the outside (555), the method comprising:
- filling an anti-corrosion agent (560) into the first through hole (551) through the first access (553), and
- filling an anti-corrosion agent (560) into the second through hole (552) through the second access (554).

5. The method according to the preceding claim, comprising:
- closing the first access (553) after filling the anti-corrosion agent (560) into the first through hole (551) with a first cover (556), and
- closing the second access (554) after filling the anti-corrosion agent (560) into the second through hole (552) with a second cover (557).

6. The method according to any one of the preceding claims,
- arranging a first sealing (558) on the tensioner (331) at the first end region (371) for sealing a first transition (361) between the tensioner (331) and the retaining device (341), and
- arranging a second sealing (559) on the tensioner (331) at the second end region (372) for sealing a second transition (362) between the tensioner (331) and the retaining device (341).

7. The method according to the preceding claim, wherein arranging the first and/or the second sealing (558, 559) comprises:
- arranging a heat shrink foil (571) over a part (563) of the retaining device (341) and a part (564) of the tensioner (331) such that the heat shrink foil (571) extends over the transition (561, 562),
- applying heat to the heat shrink foil (571) to shrink the heat shrink foil (571) for sealing the transition (561, 562) between the tensioner (331) and the retaining device (341).

8. The method according to claim 7, comprising
- wrapping the heat shrink foil (571) over the part (563) of the retaining device (341) and the part (564) of the tensioner (331), and afterwards
- bringing together two ends (572, 573) of the heat shrink foil (571),
- arranging a fastener (574) onto the two ends (572, 573) that holds the two ends together (572, 573).

9. The method according to any one of claims 5 to 8, wherein arranging the first and/or the second sealing (558, 559) comprises:
- arranging a sealing tape (580) over a part (563) of the retaining device (341) and a part (564) of the tensioner (331) such that the sealing tape (580) extends over the transition (561, 562) for sealing the transition (561, 562) between the tensioner (331) and the retaining device (341).

10. The method according to any one of claims 5 to 9, wherein arranging the first and/or the second sealing (558, 559) comprises:
- arranging a curable sealing compound (585) between the retaining device (341) and the tensioner (331) at the transition (561, 562),
- curing the sealing compound (585).

11. The method according to any one of the preceding claims, wherein the anti-corrosion agent (560) comprises a grease.

12. A bearing arrangement for a wind turbine, the bearing arrangement comprising:
- a bearing (200),
- a tensioning system (320) for reinforcement of the bearing (200), wherein the tensioning system (200) is mounted using a method according to any one of the preceding claims.

13. A wind turbine, comprising
- a bearing (200), wherein the bearing (200) is arranged at a top of a tower (102) of the wind turbine,
- a tensioning system (320) for reinforcement of the bearing (200), wherein the tensioning system (200) is mounted using a method according to any one of the preceding claims.
